# EUROPÄISCHE PATENTSCHRIFT

(11) **EP 2 752 290 B1**
(45) Veröffentlichungstag und Bekanntmachung des Hinweises auf die Patenterteilung: **09.09.2015**
(21) Anmeldenummer: 13150064.7
(22) Anmeldetag: 02.01.2013
(51) Int. Cl.: B32B 5/18, B65D 65/40, B65D 65/42, B65D 81/18

(54) **VERPACKUNGSMATERIAL FÜR KORROSIONSANFÄLLIGE GEGENSTÄNDE AUS METALL**
PACKAGING MATERIAL FOR METALLIC OBJECTS SUSCEPTIBLE TO CORROSION
MATÉRIAU D'EMBALLAGE POUR OBJETS EN MÉTAL SUJETS À LA CORROSION

(43) Veröffentlichungstag der Anmeldung: 09.07.2014
(73) Patentinhaber: K.L. Kaschier- und Laminier GmbH, 48455 Bad Bentheim-Gildehaus (DE)
(72) Erfinder: Wunderlich, Hans, 29664 Walsrode (DE)
(74) Vertreter: Cohausz Hannig Borkowski Wißgott

(56) Entgegenhaltungen:
- DE-A1-102009 013 959

## Beschreibung

Die Erfindung betrifft ein Verpackungsmaterial für korrosionsanfällige Gegenstände aus Metall sowie ein Verfahren zur Herstellung des Verpackungsmaterials.

Aus EP 2 184 162 B1 ist ein Verpackungsmaterial mit einem flüchtigen korrosionsinhibierenden Wirkstoff bekannt, welches eine für Wasserdampf und den korrosionsinhibierenden Wirkstoff im Wesentlichen undurchlässige Barriereschicht an der Verpackungsaußenseite und eine für den korrosionsinhibierenden Wirkstoff durchlässige Transferschicht an der Verpackungsinnenseite aufweist. Die Barriereschicht und die Transferschicht sind miteinander verklebt, wobei der Klebstoff mit dem korrosionsinhibierenden Werkstoff versetzt ist. Für die Herstellung des bekannten Verpackungsmaterials ist ein mehrstufiges und insofern auch aufwendiges Kaschierverfahren notwendig. Ferner erfordert das bekannte Verpackungsmaterial teure Rohstoffe, z. B. Polyurethanklebstoffe. Darüber hinaus besteht auch in funktionsmäßiger Hinsicht noch Optimierungsbedarf, denn bisweilen ist das durch die Klebstoffschicht bereitgestellte Depot für den Wirkstoff und die an der Verpackungsinnenseite wirksame Oberfläche für die Abgabe des flüchtigen Wirkstoffs noch nicht ausreichend. Daher wird bei der Verpackung von Metallgegenständen, die eine große korrosionsanfällige Oberfläche aufweisen, zusätzlich ein Kissen in die Verpackung eingelegt, das mit einem korrosionsinhibierenden Wirkstoff getränkt ist und folglich ein zusätzliches Wirkstoffdepot bildet.

Vor diesem Hintergrund liegt der Erfindung die Aufgabe zugrunde, ein Verpackungsmaterial für korrosionsanfällige Gegenstände aus Metall anzugeben, welches einfach und kostengünstig herstellbar ist und relativ große Mengen eines flüchtigen Korrosionsinhibitor aufnehmen kann, der über einen langen Zeitraum seine Schutzwirkung innerhalb einer aus dem Verpackungsmaterial gebildeten Verpackung entfaltet.

Gegenstand der Erfindung und Lösung dieser Aufgabe ist ein Verpackungsmaterial nach Anspruch 1. Ein Verfahren zur Herstellung des Verpackungsmaterials ist Gegenstand des Anspruches 9.

Das erfindungsgemäße Verpackungsmaterial ist eine Coextrusionsfolie, die verpackungsaußenseitig eine Barriereschicht aus einem ersten Kunststoff, eine innenseitige Transferschicht und eine zwischen der Barriereschicht und der Transferschicht angeordnete Reservoirschicht aus einem geschäumten Kunststoff aufweist, wobei in der Reservoirschicht ein flüchtiger, korrosionsinhibierender Wirkstoff enthalten ist und wobei die Barriereschicht eine geringere Durchlässigkeit für den korrosionsinhibierenden Wirkstoff als die Transferschicht aufweist.

Der korrosionsinhibierende Wirkstoff - nachfolgend auch VCI(volatile corrosion inhibitor)-Wirkstoff genannt - ist beispielsweise eine Verbindung eines primären, sekundären oder tertiären Amins oder eine Nitritverbindung. Der korrosionsinhibierende Wirkstoff kann ferner eine chemische Verbindung aus Ethanolamin und einer Carbonsäure, beispielsweise Caprylsäure, sein. Der korrosionsinhibierende Wirkstoff verdampft in der Reservoirschicht und migriert durch die Transferschicht. Von dort gelangt der korrosionsinhibierende Wirkstoff in einen von dem Verpackungsmaterial umschlossenen Innenraum der Verpackung, wobei sich eine Schutzatmosphäre für das korrosionsanfällige Verpackungsgut aufbaut.

Die Barriereschicht des Verpackungsmaterials ist für Wasserdampf und den korrosionsinhibierenden Wirkstoff vorzugsweise undurchlässig oder zumindest im Wesentlichen undurchlässig. Zweckmäßigerweise weist der erste Kunststoff, aus dem die Barriereschicht gebildet ist, einen hohen Polypropylenanteil auf.

Das erfindungsgemäße Verpackungsmaterial ist als Coextrudionsfolie kostengünstig herstellbar. Infolge der als Schaumstoffschicht ausgebildeten Reservoirschicht weist das Verpackungsmaterial eine hohe Speicherkapazität für den korrosionsinhibierenden Wirkstoff (VCI-Wirkstoff) auf. Die Porenstruktur der Schaumstoffschicht bildet ferner eine große Austauschfläche für eine wirksame Abgabe des flüchtigen Wirkstoffs. Die Korrosionsschutzwirkung des Verpackungsmaterials kann sich daher innerhalb eines geschlossenen Raumes der Verpackung schnell aufbauen und kann durch die Barrierewirkung der äußeren Barriereschicht des Coextrudats über einen langen Zeitraum aufrechterhalten werden.

Die Transferschicht enthält zur Unterstützung der Durchlässigkeit für den korrosionsinhibierenden Wirkstoff zweckmäßig zumindest ein polares Polymer, vorzugsweise Ethylen-Vinylacetat (EVA) und/oder Ethylenacrylsäure-Copolymer (EAA). Zusätzlich kann die Transferschicht Füllstoffe, z. B. Kreide, zur Verbesserung der Gasdurchlässigkeit enthalten. Die vorzugsweise als porenfreie Diffusionsschicht ausgebildete Transferschicht ermöglicht eine gleichförmige Abgabe des korrosionsinhibierenden Wirkstoffs und sie verhindert ferner einen unmittelbaren Kontakt zwischen dem VCI-Wirkstoff in der Reservoirschicht und dem von dem Verpackungsmaterial umschlossenen metallischen Verpackungsgut.

Das Verpackungsmaterial weist zweckmäßig eine 10 µm bis 50 µm dicke Barriereschicht und eine 5 µm bis 30 µm dicke Transferschicht auf. Die Schichtstärke der Reservoirschicht richtet sich nach der benötigten Speicherkapazität für den korrosionsinhibierenden Werkstoff. Vorzugsweise hat die Reservoirschicht eine Schichtstärke zwischen 20 µm und 150 µm.

Das Verpackungsmaterial kann eine aus einem geschäumten Kunststoff bestehende weitere Schaumstoffschicht aufweisen, die zwischen der Reservoirschicht und der Transferschicht angeordnet ist und als migrationsverzögernde Barriere wirksam ist. Sie trägt dazu bei, Verluste am VCI-Wirkstoff während des Herstellprozesses zu minimieren. Unmittelbar nach der Coextrusion enthält die zweite Schaumstoffschicht des Coextrudats keinen korrosionsinhibierenden Wirkstoff. Der in der Reservoirschicht enthaltene flüchtige korrosionsinhibierende Wirkstoff migriert allerdings in die Schaumstoffschicht, so dass bis zur Verwendung des Verpackungsmaterials die Schaumstoffschicht als weiteres Reservoir für den korrosionsinhibierenden Wirkstoff wirksam ist. Die Kombination einer von Anfang an mit einer VCI-Wirkstoff gefüllten Reservoirschicht und einer Schaumstoffschicht, die durch Migration mit VCI-Wirkstoff angereichert wird, ermöglicht die Bereitstellung einer hohen Menge an korrosionsinhibierender Wirksubstanz, wobei Wirkstoffverluste während der Folienherstellung durch die zunächst puffernde Wirkung der Schaumstoffschicht minimiert werden können.

Die Schaumstoffschicht kann unmittelbar an der Reservoirschicht anliegen oder unter Zwischenschaltung einer nicht porösen Trennschicht an die Reservoirschicht angrenzen. Durch die zusätzliche Trennschicht kann eine unkontrollierte Abgabe des VCI-Wirkstoffes an die Atmosphäre während der Folienherstellung praktisch vollständig eliminiert werden.

Die Schaumstoffschicht kann auch die Funktion der Transferschicht erfüllen. Eine Ausführungsvariante der Erfindung sieht daher vor, dass die mit einem VCI-Wirkstoff gefüllte Reservoirschicht zwischen der Barriereschicht und einer Schaumstoffschicht angeordnet ist, die als Transferschicht wirksam ist, wobei optional zwischen der Reservoirschicht und der aus einer Schaumstoffschicht bestehenden Transferschicht eine nicht poröse Trennschicht vorgesehen sein kann.

Das Verpackungsmaterial kann als Rollenware verarbeitet werden. Nach einer spiralförmigen Aufwicklung der Materialbahn grenzt die Transferschicht des Verpackungsmaterials stets wieder an eine Barriereschicht an, so dass die Transferschicht nicht der Umgebung ausgesetzt ist und Verluste an VCI-Wirksubstanz vernachlässigbar sind. Der flüchtige korrosionsinhibierende Wirkstoff ist in der Schichtenanordnung einer Bandrolle gleichsam gefangen. Innerhalb der Bandrolle migriert der in der Reservoirschicht enthaltene korrosionsinhibierende Wirkstoff aus der Reservoirschicht durch die Trennschicht in die Schaumstoffschicht des Verpackungsmaterials, so dass sich auch in der Schaumstoffschicht ein Wirkstoff-Depot bildet.

Gegenstand der Erfindung ist auch ein Verfahren nach Anspruch 9 zur Herstellung des beschriebenen Verpackungsmaterials.

Gemäß dem erfindungsgemäßen Verfahren wird durch Coextrusion eine mehrschichtige Folie hergestellt, die eine für Wasserdampf und einen korrosionsinhibierenden Wirkstoff im Wesentlichen undurchlässige Barriereschicht, eine für den korrosionsinhibierenden Wirkstoff durchlässige polymere Transferschicht sowie eine zwischen der Barriereschicht und der Transferschicht angeordnete Reservoirschicht aus einer aufschäumbaren Polymermischung aufweist, wobei der aufschäumbaren Polymermischung vor der Coextrusion ein flüchtiger korrosionsinhibierender Wirkstoff (VCI-Wirkstoff) zugegeben wird und wobei die Reservoirschicht des Coextrudats aufgeschäumt wird. Zweckmäßigerweise wird in die aufschäumbare Polymermischung ein Treibgas eingebracht, das in der Polymermischung unter Druck gelöst wird. Das Treibgas bzw. Treibmittel besteht vorzugsweise aus Stickstoff oder CO₂ und wird als überkritische Flüssigkeit (SCF Super Critical Fluid) bei hohen Drücken der Polymerschmelze zudosiert. Der Druck der überkritischen Flüssigkeit liegt in der Regel zwischen 150 bar und 350 bar und ist höher als der Schmelzedruck. Es resultiert eine einphasige Lösung. Beim Extrudieren erfährt das Gemisch einen Druckabfall, was dazu führt, dass das Treibmittel nukleiert und ein mikrozelliger Schaum mit einer feinen Verteilung von kleinen Poren gebildet wird. Das erfindungsgemäße Verfahren kann bei der Castfolienextrusion und der Blasfolienextrusion verwendet werden.

Durch Compoundierung kann der aufschäumbaren Polymermischung ein korrosionsinhibierender Wirkstoff zugegeben werden, der bei Standardbedingungen als Feststoff vorliegt. Der VCI-Wirkstoff ist beispielsweise eine Aminverbindung und/oder ein Salz. Zur Herstellung der aufschäumbaren Polymermischung kann auch ein bei Standardbedingungen flüssiger VCI-Wirkstoff, beispielsweise Oktansäure, verwendet werden. Dieser wird durch Direktdosierung zugeführt. Ferner besteht die Möglichkeit, einen bei Standardbedingungen flüssigen VCI-Wirkstoff mit dem Treibgas in die aufschäumbare Polymermischung einzubringen.

Eine weitere Ausgestaltung des erfindungsgemäßen Verfahrens sieht vor, dass eine weitere Schicht aus einer aufschäumbaren Polymermischung coextrudiert wird, die zwischen der Transferschicht und der Reservoirschicht angeordnet ist und zu einer Schaumstoffschicht aufgeschäumt wird. Die Coextrusion des Verpackungsmaterials kann dabei mit der Maßgabe erfolgen, dass die Schaumstoffschicht unmittelbar, das heißt ohne Zwischenschaltung einer weiteren Schicht, an der Reservoirschicht anliegt. Auch können die Schaumstoffschicht und die Reservoirschicht aus dem gleichen Polymer hergestellt werden.

Eine weitere Ausführungsvariante des erfindungsgemäßen Verfahrens sieht vor, dass bei der Coextrusion eine polymere Trennschicht extrudiert wird, die zwischen der Reservoirschicht und der Schaumstoffschicht angeordnet ist. Durch die Trennschicht wird erreicht, dass bei der Coextrusion eine unkontrollierte und unerwünschte Abgabe des korrosionsinhibierenden Wirkstoffes in die Atmosphäre praktisch vollständig verhindert werden kann.

Im Rahmen der Erfindung liegt es auch, der Polymerschmelze für die Transferschicht ein Treibgas, vorzugsweise als überkritische Flüssigkeit, zugegeben wird und dass die Transferschicht zu einer Schaumstoffschicht aufgeschäumt wird.

Das erfindungsgemäße Coextrusionsverfahren ermöglicht eine einfache und kostengünstige Herstellung von Verpackungsmaterial, welches einen flüchtigen korrosionsinhibierenden Wirkstoff zum Schutz korrosionsanfälliger Gegenstände aus Metall enthält. Nach dem erfindungsgemäßen Verfahren hergestelltes Verpackungsmaterial hat eine beachtliche Depotwirkung für den korrosionsinhibierenden Wirkstoff und stellt an der Verpackungsinnenseite eine große Austauschfläche zur Abgabe des flüchtigen Wirkstoffes bereit. Trotz der für eine Coextrusion erforderlichen hohen Temperatur und der großen Austauschfläche einer Schaumstoffschicht kann ein unerwünschtes Freisetzen des korrosionsinhibierenden Wirkstoffs an die Atmosphäre während der Folienherstellung verhindert oder zumindest minimiert werden.

Im Folgenden wird die Erfindung anhand einer lediglich ein Ausführungsbeispiel darstellenden Zeichnung erläutert. Es zeigen schematisch:
- **Fig. 1**: einen stark vergrößerten Querschnitt durch ein erfindungsgemäßes Verpackungsmaterial,
- **Fig. 2 bis 5**: weitere Ausgestaltungen des Verpackungsmaterials, ebenfalls im Schnitt.

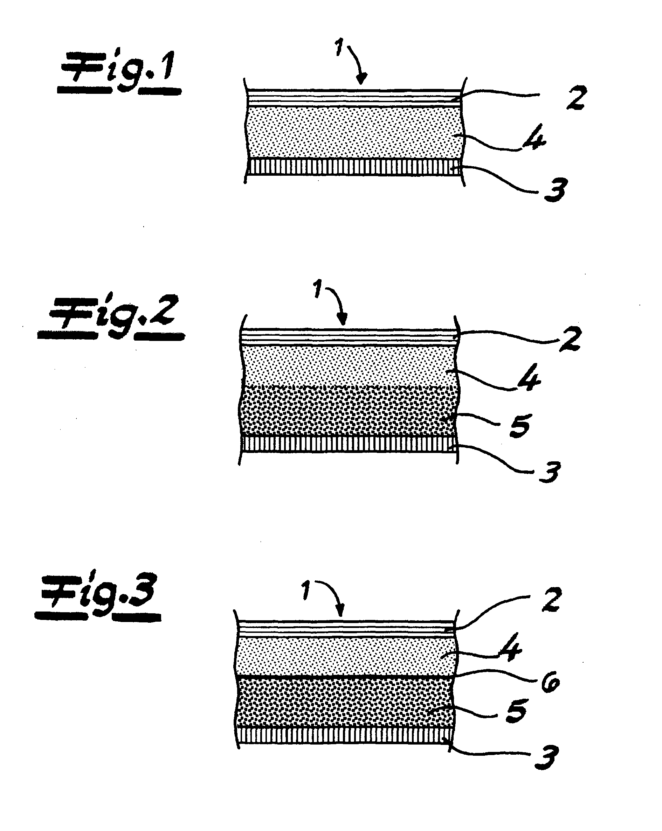

In Fig. 1 ist ein Verpackungsmaterial 1 mit einer die Verpackungsaußenseite bildenden Barriereschicht 2 und einer innenseitigem Transferschicht 3 dargestellt. Zwischen der Barriereschicht 2 und der Transferschicht 3 ist gemäß Fig. 1 eine aus einem geschäumten Kunststoff gebildete Reservoirschicht 4 angeordnet, die einen flüchtigen, korrosionsinhibierenden Wirkstoff (VCI-Wirkstoff) enthält. Die Barriereschicht ist für Wasserdampf und den korrosionsinhibierenden Wirkstoff undurchlässig und weist beispielsweise einen hohen Polypropylenanteil auf. Die Transferschicht 3 ist für den korrosionsinhibierenden Wirkstoff durchlässig und enthält zur Verbesserung der Durchlässigkeit zumindest ein polares Polymer, vorzugsweise Ethylen-Vinylacetat (EVA) und/oder Ethylen-Acrylsäure-Copolymer. Die Transferschicht 3 ermöglicht eine gleichförmige Abgabe des flüchtigen korrosionsinhibierenden Wirkstoffs und verhindert dabei einen unmittelbaren Kontakt zwischen dem VCI-Wirkstoff und einem von dem Verpackungsmaterial eingeschlossenen Gegenstand aus Metall. Die Barriereschicht 2 kann eine Schichtstärke zwischen 10 µm und 50 µm und die Transferschicht 3 eine Schichtstärke zwischen 5 µm und 30 µm aufweisen. Die Schichtstärke der Reservoirschicht 4 richtet sich nach der benötigten Speicherkapazität für den korrosionsinhibierenden Wirkstoff und liegt vorzugsweise im Bereich zwischen 20 µm und 150 µm.

Im Ausführungsbeispiel der Fig. 2 weist das Verpackungsmaterial 1 vier Schichten auf, wobei die Verpackungsaußenseite von der Barriereschicht 2 und die Innenseite des Verpackungsmaterials 1 von der Transferschicht 3 gebildet ist. Die einen flüchtigen korrosionsinhibierenden Wirkstoff enthaltene Reservoirschicht 4 grenzt an die Barriereschicht 2 an. Zwischen der Reservoirschicht 4 und der Transferschicht 3 ist eine Schaumstoffschicht 5 angeordnet, die zumindest unmittelbar nach der Coextrusion keinen oder keinen nennenswerten Anteil des korrosionsinhibierenden Wirkstoffes enthält. Der korrosionsinhibierende Wirkstoff wird zunächst ausschließlich in die Reservoirschicht 4 eingebracht. Die angrenzende Schaumstoffschicht 5 des Coextrudats verhindert dabei ein unkontrolliertes Entweichen des flüchtigen Wirkstoffs in die Atmosphäre während oder unmittelbar nach der Herstellung des Verpackungsmaterials 1. Das Verpackungsmaterial 1 wird anschließend zu einer Rolle aufgewickelt. Nach dem Aufwickeln zu einer Materialrolle grenzt die Transferschicht 3 stets an eine Barriereschicht 2 an, so dass die Oberfläche der Transferschicht 3 nicht frei liegt und flüchtiger VCI-Wirkstoff nicht in die Atmosphäre gelangt. Der Wirkstoff ist gleichsam in der Bandrolle gefangen. Vor der Verwendung des Verpackungsmaterials 1 migriert der VCI-Wirkstoff aus der Reservoirschicht 4 in die Schaumstoffschicht 5, die ein weiteres Depot für die Aufnahme des VCI-Wirkstoffes bildet. Insofern hat die Schaumstoffschicht 5 eine doppelte Funktion. Sie kann als Depot für den VCI-Wirkstoff genutzt werden. Gleichzeitig verhindert sie während und unmittelbar nach der Coextrusion, dass der VCI-Wirkstoff aufgrund der bei einer Coextrusion anzuwendenden hohen Temperaturen verdampft und unkontrolliert in die Atmosphäre übergeht.

Die Fig. 3 zeigt ein Verpackungsmaterial 1 mit einer die Verpackungsaußenseite bildenden Barriereschicht 2, einer die Verpackungsinnenseite bildenden Transferschicht 3 sowie einer Reservoirschicht 4, die zwischen der Barriereschicht 2 und der Transferschicht 3 angeordnet ist und an die Barriereschicht 2 angrenzt. Die von der Barriereschicht 2 abgewandte Oberfläche der Reservoirschicht 4 ist mit einer Trennschicht 6 bedeckt, an welche eine Schaumstoffschicht 5 angrenzt. Verpackungsinnenseitig grenzt die Transferschicht 3 an die Schaumstoffschicht 5 an. Die Trennschicht 6 trägt ebenfalls dazu bei, dass der flüchtige VCI-Wirkstoff bei der Coextrusion des Verpackungsmaterials 1 nicht unkontrolliert in die Atmosphäre entweicht. Der VCI-Wirkstoff muss zunächst durch die Trennschicht 6 diffundieren, so dass der Übergang des VCI-Wirkstoffes aus der Reservoirschicht 4 in die Schaumstoffschicht 5 verlangsamt wird. Dadurch wird sichergestellt, dass die Beladung der Schaumstoffschicht 5 mit Wirkstoff langsam erfolgt und beispielsweise erst nach dem Aufrollen des Verpackungsmaterials 1 zu einer Bandrolle abgeschlossen ist.

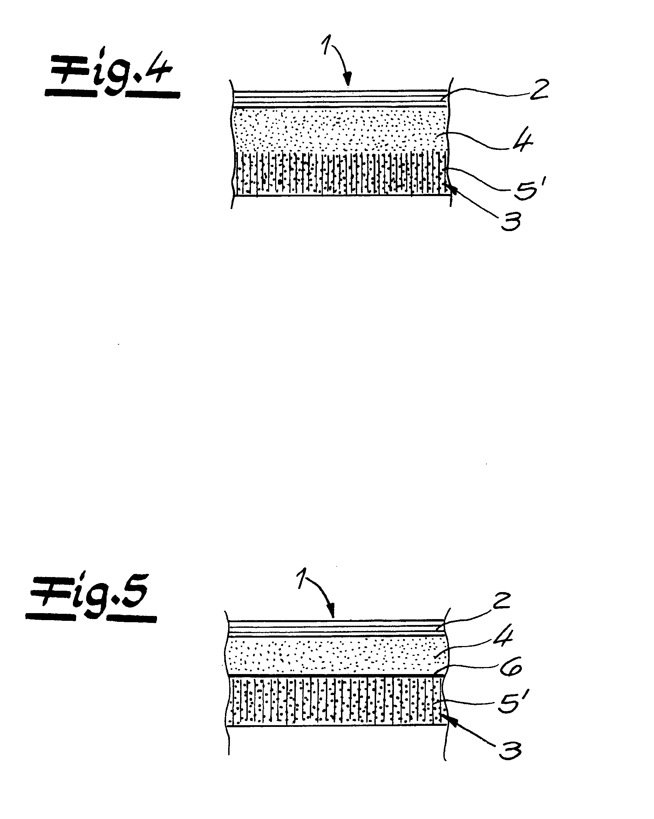

Im Ausführungsbeispiel der Fig. 4 ist die mit einem VCI-Wirkstoff gefüllte Reservoirschicht 4 zwischen der Barriereschicht 2 und einer Schaumstoffschicht 5' angeordnet, die als Transferschicht wirksam ist. Die als Schaumstoffschicht 5' ausgebildete Transferschicht 3 grenzt unmittelbar an die den VCI-Wirkstoff enthaltende Reservoirschicht 4 an. Optional kann gemäß der Darstellung in Fig. 5 zwischen der Reservoirschicht 4 und der als Schaumstoff 5' ausgebildeten Transferschicht eine Trennschicht 6 vorgesehen sein, die dazu beiträgt, dass der flüchtige VCI-Wirkstoff bei der Coextrusion des Verpackungsmaterials 1 nicht unkontrolliert in die Atmosphäre entweicht. Der VCI-Wirkstoff muss zunächst durch die Trennschicht 6 diffundieren, so dass der Übergang des VCI-Wirkstoffes aus der Reservoirschicht 4 in die Schaumstoffschicht 5' verlangsamt wird.

## Patentansprüche

1. Verpackungsmaterial für korrosionsanfällige Gegenstände aus Metall, mit einer eine Verpackungsaußenseite bildenden Barriereschicht (2) aus einem ersten Kunststoff, einer innenseitigen Transferschicht (3) und einer zwischen der Barriereschicht (2) und der Transferschicht (3) angeordneten Reservoirschicht (4) aus einem geschäumten Kunststoff, wobei in der Reservoirschicht (4) ein flüchtiger, korrosionsinhibierender Wirkstoff enthalten ist, wobei die Barriereschicht (2) eine geringere Durchlässigkeit für den korrosionsinhibierenden Wirkstoff als die Transferschicht (3) aufweist und wobei das Verpackungsmaterial (1) eine Coextrusionsfolie ist.

2. Verpackungsmaterial nach Anspruch 1, wobei die Transferschicht (3) zur Unterstützung der Durchlässigkeit für den korrosionsinhibierenden Wirkstoff zumindest ein polares Polymer, vorzugsweise Ethylen-Vinylacetat (EVA) und/oder Ethylen-Acrylsäure-Copolymer enthält.

3. Verpackungsmaterial nach Anspruch 1 oder 2, wobei die Transferschicht (3) Füllstoffe zur Verbesserung der Gasdurchlässigkeit enthält.

4. Verpackungsmaterial nach einem der Ansprüche 1 bis 3, wobei die Barriereschicht (2) eine Schichtstärke zwischen 10 µm und 50 µm, die Reservoirschicht (4) eine Schichtstärke zwischen 20 µm und 150 µm und die Transferschicht (3) eine Schichtstärke zwischen 5 µm und 30 µm aufweist.

5. Verpackungsmaterial nach einem der Ansprüche 1 bis 4, wobei das Verpackungsmaterial (1) eine aus einem geschäumten Kunststoff bestehende Schaumstoffschicht (5) als migrationsverzögernde Barriere aufweist, die zwischen der Reservoirschicht (4) und der Transferschicht (3) angeordnet ist.

6. Verpackungsmaterial nach Anspruch 5, wobei die Schaumstoffschicht (5) unmittelbar an der Reservoirschicht (4) anliegt.

7. Verpackungsmaterial nach Anspruch 1 oder 2, wobei die Transferschicht (3) eine aus einem geschäumten Kunststoff bestehende Schaumstoffschicht (5') ist.

8. Verpackungsmaterial nach Anspruch 5 oder 7, wobei zwischen der Schaumstoffschicht (5, 5') und der Reservoirschicht (4) eine nicht poröse Trennschicht (6) angeordnet ist.

9. Verfahren zur Herstellung eines Verpackungsmaterials nach einem der Ansprüche 1 bis 8,
wobei eine für Wasserdampf und einen korrosionsinhibierenden Wirkstoff im Wesentlichen undurchlässige Barriereschicht (2), eine für den korrosionsinhibierenden Wirkstoff durchlässige polymere Transferschicht (3) sowie eine zwischen der Barriereschicht (2) und der Transferschicht (3) angeordnete Reservoirschicht (4) aus einer aufschäumbaren Polymermischung coextrudiert werden,
wobei der aufschäumbaren Polymermischung vor der Coextrusion ein flüchtiger, korrosionsinhibierender Wirkstoff (VCI) zugegeben wird und
wobei die Reservoirschicht (4) des Coextrudats aufgeschäumt wird.

10. Verfahren nach Anspruch 9, wobei die aufschäumbare Polymermischung ein Treibgas enthält, welches vor der Coextrusion eingebracht wird.

11. Verfahren nach Anspruch 10, wobei das Treibgas als überkritische Flüssigkeit in die Polymermischung eingebracht wird und mit der Polymermischung eine Einphasenlösung bildet.

12. Verfahren nach einem der Ansprüche 9 bis 11, wobei eine weitere Schicht aus einer schäumbaren Polymermischung coextrudiert wird, die zwischen der Transferschicht (3) und der Reservoirschicht (4) angeordnet ist und zu einer Schaumstoffschicht (5) aufgeschäumt wird.

13. Verfahren nach einem der Ansprüche 9 bis 11, wobei der Polymerschmelze für die Transferschicht ein Treibgas, vorzugsweise als überkritische Flüssigkeit zugegeben wird, und wobei die Transferschicht (3) zu einer Schaumstoffschicht (5') aufgeschäumt wird.

14. Verfahren nach Anspruch 12 oder 13, wobei bei der Coextrusion eine polymere Trennschicht extrudiert wird, die zwischen der Reservoirschicht (4) und der Schaumstoffschicht (5, 5') angeordnet ist.

## Claims

1. Packaging material for metallic objects susceptible to corrosion, comprising a barrier layer (2) made of a first plastic which forms a package outer side, an inner-side transfer layer (3) and reservoir layer (4) made of a foamed plastic, disposed between the barrier layer (2) and the transfer layer (3), wherein a volatile, corrosion-inhibiting active substance is contained in the reservoir layer (4), wherein the barrier layer (2) has a lower permeability for the corrosion-inhibiting active substance than the transfer layer (3) and wherein the packaging material (1) is a co-extruded film.

2. The packaging material according to claim 1, wherein the transfer layer (3) contains at least one polar polymer, preferably ethylene vinyl acetate (EVA) and/or ethylene acrylic acid copolymer for supporting the permeability for the corrosion-inhibiting active substance.

3. The packaging material according to claim 1 or 2, wherein the transfer layer (3) contains fillers for improving the gas permeability.

4. The packaging material according to any one of claims 1 to 3, wherein the barrier layer (2) has a layer thickness between 10 µm and 50 µm, the reservoir layer (4) has a layer thickness between 20 µm and 150 µm and the transfer layer (3) has a layer thickness between 5 µm and 30 µm.

5. The packaging material according to any one of claims 1 to 4, wherein the packaging material (1) comprises a foam layer (5) consisting of a foamed plastic as a migration-retarding barrier, which is disposed between the reservoir layer (4) and the transfer layer (3).

6. The packaging material according to claim 5, wherein the foam layer (5) abuts directly against the reservoir layer (4).

7. The packaging material according to claim 1 or 2, wherein the transfer layer (3) is a foam layer (5') consisting of a foamed plastic.

8. The packaging material according to claim 5 or 7, wherein a non-porous separating layer (6) is disposed between the foam layer (5, 5') and the reservoir layer (4).

9. Method for producing a packaging material according to any one of claims 1 to 8,
wherein a substantially impermeable barrier layer (2) for water vapour and a corrosion-inhibiting active substance, a permeable polymer transfer layer (3) for the corrosion-inhibiting active substance and a reservoir layer (4) made of a foamable polymer mixture disposed between the barrier layer (2) and the transfer layer (3) are co-extruded,
wherein a volatile corrosion-inhibiting active substance (VCl) is added to the foamable polymer mixture before the co-extrusion and
wherein the reservoir layer (4) of the co-extrudate is foamed.

10. The method according to claim 9, wherein the foamable polymer mixture contains a propellant gas which is introduced before the co-extrusion.

11. The method according to claim 10, wherein the propellant gas is introduced into the polymer mixture as supercritical liquid and forms a single-phase solution with the polymer mixture.

12. The method according to any one of claims 9 to 11, wherein a further layer of a foamable polymer mixture is co-extruded which is disposed between the transfer layer (3) and the reservoir layer (4) and which is foamed to a foam layer (5).

13. The method according to any one of claims 9 to 11, wherein a propellant gas, preferably as supercritical liquid, is added to the polymer melt for the transfer layer and wherein the transfer layer (3) is foamed to a foam layer (5').

14. The method according to claim 12 or 13, wherein during the co-extrusion a polymer separating layer which is disposed between the reservoir layer (4) and the foam layer (5, 5') is extruded.

## Revendications

1. Matériau d'emballage pour objets sujets à corrosion en métal, comportant une couche formant barrière (2) formant une face extérieure de l'emballage en première matière plastique, une couche de transfert intérieure (3) et une couche réservoir (4) disposée entre la couche formant barrière (2) et la couche de transfert (3) en mousse de plastique, la couche réservoir (4) contenant une substance active volatile inhibant la corrosion, la couche formant barrière (2) présentant une plus faible perméabilité à la substance active inhibant la corrosion que la couche de transfert (3) et le matériau d'emballage (1) étant un film coextrudé.

2. Matériau d'emballage selon la revendication 1, dans lequel la couche de transfert (3), pour contribuer à la perméabilité à la substance active inhibant la corrosion, contient au moins un polymère polaire, de préférence du vinylacétate d'éthylène (EVA) et/ou du copolymère éthylène-acide acrylique.

3. Matériau d'emballage selon la revendication 1 ou 2, dans lequel la couche de transfert (3) contient des matières de charge pour améliorer la perméabilité au gaz.

4. Matériau d'emballage selon une des revendications 1 à 3, dans lequel la couche formant barrière (2) a une épaisseur de couche comprise entre 10 µm et 50 µm, la couche réservoir (4) une épaisseur de couche comprise entre 20 µm et 150 µm et la couche de transfert (3) une épaisseur de couche comprise entre 5 µm et 30 µm.

5. Matériau d'emballage selon une des revendications 1 à 4, dans lequel le matériau d'emballage (1) présente une couche de mousse (5) composée de mousse de plastique et faisant office de barrière retardant la migration et qui est disposée entre la couche réservoir (4) et la couche de transfert (3).

6. Matériau d'emballage selon la revendication 5, dans lequel la couche en mousse de plastique (5) repose directement sur la couche réservoir (4).

7. Matériau d'emballage selon la revendication 1 ou 2, dans lequel la couche de transfert (3) est une couche en mousse (5') composée de mousse de plastique.

8. Matériau d'emballage selon la revendication 5 ou 7, dans lequel, entre la couche en mousse (5, 5') et la couche réservoir (4), une couche séparatrice non poreuse (6) est disposée.

9. Procédé de fabrication d'un matériau d'emballage selon une des revendications 1 à 8,
dans lequel une couche formant barrière (2) sensiblement imperméable à la vapeur d'eau et à une substance active inhibant la corrosion, une couche de transfert (3) perméable à la substance active inhibant la corrosion et une couche réservoir (4) disposée entre la couche formant barrière (2) et la couche de transfert (3) sont coextrudées à partir d'un mélange de polymère transformable en mousse,
dans lequel une substance active inhibant la corrosion (VCI) est ajoutée au mélange de polymère transformable en mousse avant la coextrusion et
dans lequel la couche réservoir (4) du coextrudat est transformée en mousse.

10. Procédé selon la revendication 9, dans lequel le mélange de polymère transformable en mousse contient un gaz propulseur qui est intégré avant la coextrusion.

11. Procédé selon la revendication 10, dans lequel le gaz propulseur est intégré sous forme de liquide sur-critique dans le mélange de polymère et forme avec le mélange de polymère une solution monophasée.

12. Procédé selon une des revendications 9 à 11, dans lequel est coextrudée une autre couche faite d'un mélange de polymère transformable en mousse qui est transformée en mousse entre la couche de transfert (3) et la couche réservoir (4) et est transformée en mousse pour former une couche de mousse (5).

13. Procédé selon une des revendications 9 à 11, dans lequel un gaz propulseur, de préférence sous forme de liquide sur-critique, est ajouté à la coulée de polymère et la couche de transfert (3) est transformée en une couche de mousse (5').

14. Procédé selon la revendication 12 ou 13, dans lequel, lors de la coextrusion, est extrudée une couche séparatrice en polymère qui est disposée entre la couche réservoir (4) et la couche de mousse (5, 5').
